# EUROPÄISCHE PATENTSCHRIFT

(11) **EP 0 400 355 B1**
(45) Veröffentlichungstag und Bekanntmachung des Hinweises auf die Patenterteilung: **03.02.1993**
(21) Anmeldenummer: 90108544.9
(22) Anmeldetag: 07.05.1990
(51) Int. Cl.: C01B 21/14

(54) **Verfahren zur Herstellung von kristallinem Hydroxylammoniumsulfat mit niedrigem Ammoniumsulfatgehalt**
Process for the preparation of crystalline hydroxylammonium sulphate with lower ammonium sulfate content
Procédé de fabrication de sulfate d'hydroxylammonium cristallin ayant une faible teneur en sulfate d'ammonium

(30) Priorität: 19.05.1989 DE 3916320
(43) Veröffentlichungstag der Anmeldung: 05.12.1990
(73) Patentinhaber: BASF Aktiengesellschaft, 67063 Ludwigshafen (DE)
(72) Erfinder: Fuchs, Hugo, Dr., D-6700 Ludwigshafen (DE); Neubauer, Gerald, Dr., D-6940 Weinheim (DE); Ritz, Josef, Dr., D-6700 Ludwigshafen (DE); Weiss, Franz-Josef, Dr., D-6708 Neuhofen (DE)

(56) Entgegenhaltungen:
- EP-A- 0 237 052
- DE-A- 2 423 982
- DE-B- 1 177 118
- CHEMICAL ABSTRACTS, vol. 96, no. 14, April 1982 Columbus, Ohio, USA F.W. Koff et al.: "Ion-exchange process for the recovery of hydroxylamine from Raschig synthesis mixtures." Seite 134; ref. no. 106564 J
- ZEITSCHRIFT FUR ANORGANISCHE UND ALLGEMEINE CHEMIE. vol. 288, 1956, LEIPZIG DD Seiten 29 - 35; H.Holzapfel: "Zur Darstellung von Lösungen freien Hydroxylamins durch Ionen-Austausch."

## Beschreibung

Bei der Herstellung von Hydroxylammoniumsulfat durch katalytische Hydrierung von Stickstoffmonoxid mit Wasserstoff in wäßriger Schwefelsäure in Gegenwart von Edelmetallkatalysatoren erhält man eine wäßrige Lösung von Hydroxylammoniumsulfat, die Ammoniumsulfat als Nebenprodukt enthält und zusätzlich noch nicht umgesetzte Schwefelsäure. Solche Lösungen eignen sich nicht für die Herstellung von kristallinem Hydroxylammoniumsulfat im Hinblick auf den Gehalt an freier Schwefelsäure. Wird die freie Schwefelsäure vor dem Eindampfen der wäßrigen Lösung neutralisiert, z.B. mit Ammoniak, so erhält man zusätzliches Ammoniumsulfat, wodurch sich beim Auskristallisieren der Gehalt an Ammoniumsulfat im kristallisierten Hydroxylammoniumsulfat erhöht. Um den Gehalt an Ammoniumsulfat im kristallisierten Hydroxylammoniumsulfat z.B. auf einen Wert von 1 Gew.-% zu begrenzen, konnte deshalb bei der Kristsallisation lediglich ein Drittel der vorhandenen Hydroxylammoniumsulfatmenge auskristallisiert werden und die restliche Lösung mußte für andere Zwecke verwendet werden. Dies ist eine erhebliche Begrenzung der Kristallisationskapazität, abgesehen von der Tatsache, daß erhebliche Mengen an Mutterlauge anfallen.

In der DE-A 2 423 982 wird auch schon ein Verfahren beschrieben, bei dem man kristallisiertes Hydroxylammoniumsulfat aus Lösungen, die zusätzlich Ammoniumsulfat enthalten, durch fraktionierte Kristallisation und Umkristallisieren erhält. Dieses Verfahren hat den Nachteil, daß es technisch sehr aufwendig ist und zudem die Kapazitätsbegrenzung bei der Kristallisation nicht löst.

Es war deshalb die technische Aufgabe gestellt, ein Verfahren zur Herstellung von kristallinem Hydroxylammoniumsulfat aus Lösungen, die neben Hydroxylammoniumsulfat Ammoniumsulfat und Schwefelsäure enthalten, zur Verfügung zu stellen, bei dem kristallisiertes Hydroxylammoniumsulfat mit niedrigem Ammoniumsulfatgehalt erhalten wird, Korrosionsprobleme vermieden werden und die Kapazität der Kristallisation verbessert wird.

Diese Aufgabe wird gelöst in einem Verfahren zur Herstellung von kristallinem Hydroxylammoniumsulfat mit niedrigem Ammoniumsulfatgehalt aus wäßrigen Lösungen, die neben Hydroxylammoniumsulfat noch Ammoniumsulfat und Schwefelsäure enthalten, welches folgende Schritte umfaßt
a) Inberührungbringen einer wäßrigen Lösung, die je Gewichtsteil Hydroxylammoniumsulfat 0,02 bis 0,3 Gewichtsteile Ammoniumsulfat und 0,02 bis 0,2 Gewichtsteile Schwefelsäure enthält mit basischen Ionenaustauschern unter Erhalt einer Lösung, die einen pH-Wert von 3,0 bis 4,0 aufweist
b) Abtrennen des basischen Ionenaustauschers von der wäßrigen Hydroxylammoniumsulfatlösung
c) Eindampfen der so erhaltenen wäßrigen Hydroxylammoniumsulfatlösung unter vermindertem Druck bei einer Temperatur < 100°C unter Erhalt einer konzentrierteren Hydroxylammoniumsulfatlösung
d) Auskristallisieren von höchstens 70 Gew.-% der in der Lösung enthaltenen Menge an Hydroxylammoniumsulfat unter Erhalt von kristallinem Hydroxylammoniumsulfat und Mutterlauge und
e) Abtrennen vom kristallinem Hydroxylammoniumsulfat von der Mutterlauge.

Das neue Verfahren hat den Vorteil, daß man kristallines Hydroxylammoniumsulfat mit einem niedrigen Gehalt an Ammoniumsulfat erhält bei erhöhter Kristallisationskapazität. Darüberhinaus hat das neue Verfahren den Vorteil, daß Korrosionsprobleme vermieden werden und das Verfahren leicht kontinuierlich gestaltet werden kann.

Erfindungsgemäß verwendet man wäßrige Lösungen, die je Gewichtsteil Hydroxylammoniumsulfat 0,02 bis 0,3, insbesondere 0,04 bis 0,1 Gewichtsteile Ammoniumsulfat und 0,02 bis 0,2 Gewichtsteile, insbesondere 0,03 bis 0,08 Gewichtsteile Schwefelsäure enthalten. In der Regel haben die verwendeten wäßrigen Lösungen ein Gehalt an Hydroxylammoniumsulfat von 20 bis 30 Gew.-%, insbesondere 23 bis 28 Gew.-%. Geeignete Ausgangslösungen erhält man beispielsweise durch katalytische Hydrierung von Stickstoffmonoxid mit Wasserstoff in wäßriger Schwefelsäure in Gegenwart von Edelmetall insbesondere Platinkatalysatoren. Ein geeignetes Verfahren wird beispielsweise beschrieben in DE-C 1 177 118. Eine typische Lösung enthält beispielsweise 24 bis 26 Gew.-% Hydroxylammoniumsulfat, 1,5 bis 2 Gew.-% Ammoniumsulfat sowie 1,2 bis 1,5 Gew.-% Schwefelsäure.

In der Stufe a) wird die Ausgangslösung mit basischen Ionenaustauschern unter Erhalt einer Lösung mit einem pH-Wert von 3,0 bis 4,0, insbesondere 3,2 bis 3,8 in Berührung gebracht. Hierbei hält man vorteilhaft eine Temperatur von 10 bis 50°C ein. Besonders bewährt haben sich schwachbasische Ionenaustauscher. Solche Ionenaustauscher sind z.B. vernetzte Polymere mit primären, sekundären oder tertiären Aminogruppen. Geeignete Ionenaustauscher sind beispielsweise aufgebaut aus vernetztem Polystyrol oder Polyacrylat, das primäre, sekundäre oder tertiäre Aminogruppen enthält. Die verwendeten Ionenaustauscher werden wie üblich vor ihrer Verwendung durch Behandeln mit wäßriger Ammoniaklösung in ihre aktive Form übergeführt.

In der Regel wendet man zunächst basische Ionenaustauscher im überschuß, bezogen auf den Gehalt an freier Schwefelsäure an, und gibt dann zusätzliche Ausgangslösung hinzu, bis die gesamte Lösung den obengenannten pH-Wert erreicht hat. Die so erhaltene Lösung enthält in der Regel je Gewichtsteil Hydroxylammoniumnsulfat 0,02 bis 0,3 Gewichtsteile Ammoniumsulfat und bis zu 0,02 Gewichtsteile Schwefelsäure.

In der Stufe b) wird der basische Ionenaustauscher von der wäßrigen Hydroxylammoniumsulfatlösung getrennt, z.B. durch Filtration.

Nach einer bevorzugten technischen Ausführungsform werden die Stufen a) und b) vereinigt, wobei das in Berührung bringen der Ausgangslösung mit dem basischen Ionenaustauscher und dessen Abtrennung zugleich erfolgt. Hierbei wendet man fest angeordnete Ionenaustauscher an, z.B. in einer Ionenaustauschersäule und leitet darüber von oben nach unten oder von unten nach oben solange Ausgangslösung, bis die insgesamt durchgeleitete Menge an Ausgangslösung den obengenannten pH-Wert erreicht hat. Anschließend wird die Ionenaustauschersäule wiederum mit wäßriger Ammoniaklösung regeneriert. Vorteilhaft verwendet man mehrere, z.B. 2 bis 6 Säulen, die abwechslungsweise mit Ausgangslösung beaufschlagt und regeneriert werden.

Die so erhaltene wäßrige Hydroxylammoniumsulfatlösung mit dem obengenannten pH-Wert wird in der Stufe c) unter vermindertem Druck bei einer Temperatur unter 100°C unter Erhalt einer konzentrierteren Hydroxylammoniumsulfatlösung eingedampft. Vorteilhaft wird bis zur Sättigungskonzentration des Hydroxylammoniumsulfat eingedamft. Hierbei hält man in der Regel eine Temperatur unterhalb 100°C, z.B. von 50 bis 90°C ein und wendet verminderten Druck, z.B. von 120 bis 670 mbar an.

In der Stufe d) wird aus der so erhaltenen höherkonzentrierten, insbesondere gesättigten Hydroxylammoniumsulfatlösung höchstens 70 Gew.-% der in der wäßrigen Lösung enthaltenen Hydroxylammoniumsulfatmenge auskristallisiert unter Erhalt von kristallinem Hydroxylammoniumsulfat und einer Mutterlauge. Sofern der Ammoniumsulfatgehalt in kristallinem Hydroxylammoniumsulfat besonders niedrig liegen soll, z.B. bei höchstens 0,5 Gew.-%, so wird vorteilhaft bis zu 40 Gew.-% der in der wäßrigen Lösung enthaltenen Hydroxylammoniumsulfatmenge auskristallisiert. Das Auskristallisieren erfolgt beispielsweise durch Abkühlen der wäßrigen Hydroxylammoniumsulfatlösung.

Nach einem in der Technik bevorzugten Verfahren werden die Schritte c) und d) kombiniert, wobei man unter den genannten Bedingungen die wäßrige Hydroxylammoniumsulfatlösung eindampft, eine konzentrierte Hydroxylammoniumsulfatlösung erhält und durch weiteres Eindampfen eine Maische von kristallinem Hydroxylammoniumsulfat erhält. Die verdampfte Wassermenge wird hierbei fortlaufend durch Zugabe von wäßriger Hydroxylammoniumsulfatlösung ergänzt. Ein solches kontinuierliches Verfahren wird vorteilhaft in Verdampferkristallern, z.B. nach dem Umlaufprinzip (Oslo-Kristaller) durchgeführt. Hierbei setzt sich die Kristallmaische des Hydroxylammoniumsulfat am unteren Ende ab und wird kontinuierlich abgezogen.

In der Stufe e) wird das so gewonnene kristalline Hydroxylammoniumsulfat von der Mutterlauge getrennt, z.B. durch Abfiltrieren insbesondere durch Abzentrifugieren. Vorteilhaft wird anhaftende Mutterlauge noch durch Waschen mit Wasser entfernt, wobei das Waschwasser wiederum in Stufe c) zurückgeführt wird oder in der Mutterlauge verbleibt.

Das Verfahren nach der Erfindung führt man beispielsweise durch, indem man die vorgenannte Hydroxylammoniumsulfat enthaltende Ausgangslösung über eine Ionentauschersäule mit basischen Ionenaustauschern leitet, bis die Gesamtmenge der ablaufenden Hydroxylammoniumsulfatlösung einen pH-Wert von 3,0 bis 4,0 aufweist und anschließend die so erhaltene Lösung unter Abscheiden von höchstens 70 % der in der Lösung enthaltenen Hydroxylammoniumsulfatmenge bei einer Temperatur unter 100°C unter vermindertem Druck eindampft und aus der kristallines Hydroxylammoniumsulfat enthaltenden Maische kristallines Hydroxylammoniumsulfat abtrennt.

Hydroxylammoniumsulfat mit niedrigem Ammoniumsulfatgehalt wie es nach dem Verfahren der Erfindung erhältlich ist, eignet sich zur Herstellung von Flotationshilfsmitteln, zur Anwendung in der Photoindustrie, zur Herstellung von Pflanzenschutzmitteln und Pharmazeutika.

Das Verfahren der Erfindung sei an folgendem Beispiel veranschaulicht.

### Beispiel

In eine Ionenaustauschersäule mit einem Durchmesser von 30 mm und einer Höhe von 300 mm wurden 200 ml eines basischen Ionenaustauschers auf Basis von vernetztem Polystyrol mit Aminogruppen eingefüllt und der Ionenaustauscher durch Behandeln mit 3 gew.-%iger wäßriger Ammoniaklösung regeneriert und anschließend mit Wasser gewaschen. Über den basischen Ionenaustauscher leitet man anschließend eine Hydroxylammoniumsulfatlösung, die je kg 254 g Hydroxylammoniumsulfat, 13,0 g freie Schwefelsäure und 18,6 g Ammoniumsulfat enthält. Die aus der Ionentauschersäule ablaufende Lösung hatte zunächst einen pH-Wert von ca. 8. Dieser fiel langsam wieder ab. Der Zulauf wurde solange aufrechterhalten bis die insgesamt durchgelaufene Menge an Lösung einen pH-Wert von 3,35 aufwies. Die so erhaltene Lösung enthielt je kg 236 g Hydroxylammoniumsulfat und 17,0 g Ammoniumsulfat. Freie Schwefelsäure konnte nicht mehr nachgewiesen werden.

Die so erhaltene schwefelsäurefreie Hydroxylammoniumsulfatlösung wurde bei ∼60°C unter einem Druck von 190 mbar bis zur Sättigung eingedampft und durch Abkühlen auf 20°C 50 % des Hydroxylammoniumsulfats kristallin abgeschieden und abgetrennt. Das so erhaltene kristalline Hydroxylammoniumsulfat hatte einen Gehalt von 0,6 Gew.-% Ammoniumsulfat.

### Vergleichsbeispiel

Die im Beispiel verwendete Hydroxylammoniumsulfatlösung mit einem Gehalt von 254 g Hydroxylammoniumsulfat per kg, einem freien Schwefelsäuregehalt von 13,0 g und einem Ammoniumsulfatgehalt von 18,6 g, wurde mit NH₃ neutralisiert bis keine freie Schwefelsäure mehr nachweisbar war.

Die so erhaltene Hydroxylammoniumsulfatlösung wurde - wie im Beispiel beschrieben - eingedampft und wieder 50 % des Hydroxylammoniumsulfats kristallin abgeschieden und abgetrennt. Das so erhaltene kristalline Hydroxylammoniumsulfat hatte einen Gehalt von 1,1 % Gew.-% Ammoniumsulfat.

## Patentansprüche

1. Verfahren zur Herstellung von kristallinem Hydroxylammoniumsulfat mit niedrigem Ammoniumsulfatgehalt aus wäßrigen Lösungen, die neben Hydroxylammoniumsulfat Ammoniumsulfat und Schwefelsäure enthalten, welches folgende Schritte umfaßt
a) Inberührungbringen einer wäßrigen Lösung, die je Gewichtsteil Hydroxylammoniumsulfat 0,02 bis 0,3 Gewichtsteile Ammoniumsulfat und 0,02 bis 0,2 Gewichtsteile Schwefelsäure enthält mit basischen Ionenaustauschern unter Erhalt einer Lösung mit einem pH-Wert von 3,0 bis 4,0
b) Abtrennen des basischen Ionenaustauschers von der wäßrigen Hydroxylammoniumsulfatlösung
c) Eindampfen der so erhaltenen wäßrigen Hydroxylammoniumsulfatlösung unter vermindertem Druck bei einer Temperatur < 100°C unter Erhalt einer konzentrierteren Hydroxylammoniumsulfatlösung
d) Auskristallisieren von höchstens 70 Gew.-% der in der wäßrigen Lösung enthaltenen Menge an Hydroxylammoniumsulfat unter Erhalt von kristallinem Hydroxylammoniumsulfat und Mutterlauge und
e) Abtrennen von kristallinem Hydroxylammoniumsulfat von der Mutterlauge.

2. Verfahren nach Anspruch 1, dadurch gekennzeichnet, daß man von einer Hydroxylammoniumsulfatlösung, die durch katalytische Hydrierung von Stickstoffmonoxid mit Wasserstoff in wäßriger Schwefelsäure in Gegenwart von Edelmetallkatalysatoren erhalten wurde, ausgeht.

3. Verfahren nach einem der Ansprüche 1 und 2, dadurch gekennzeichnet, daß man schwach basische Ionenaustauscher verwendet.

4. Verfahren nach einem der Ansprüche 1 bis 3, dadurch gekennzeichnet, daß man die wäßrige Hydroxylammoniumsulfatlösung durch einen fest angeordneten basischen Ionenaustauscher leitet, bis die Gesamtmenge der erhaltenen Lösung einen pH-Wert von 3,0 bis 4,0 aufweist.

5. Verfahren nach einem der Ansprüche 1 bis 4, dadurch gekennzeichnet, daß man in Stufe c) die Hydroxylammoniumsulfatlösung bei einer Temperatur von 50 bis 90°C unter einem Druck von 120 bis 670 mbar eindampft.

6. Verfahren nach einem der Ansprüche 1 bis 5, dadurch gekennzeichnet, daß man während des Eindampfens kristallines Hydroxylammoniumsulfat abscheidet.

7. Verfahren nach einem der Ansprüche 1 bis 6, dadurch gekennzeichnet, daß man bis zu 40 Gew.-% der in der wäßrigen Lösung enthaltenen Hydroxylammoniumsulfat kristallin abscheidet.

## Claims

1. A process for the preparation of crystalline hydroxylammonium sulfate having a low ammonium sulfate content from an aqueous solution which, in addition to hydroxylammonium sulfate, contains ammonium sulfate and sulfuric acid, the said process comprising the following steps:
a) Bringing an aqueous solution which contains from 0.02 to 0.3 part by weight of ammonium sulfate and from 0.02 to 0.2 part by weight of sulfuric acid per part by weight of hydroxylammonium sulfate into contact with a basic ion exchanger and obtaining a solution which has a pH of from 3.0 to 4.0,
b) separating off the basic ion exchanger from the aqueous hydroxylammonium sulfate solution,
c) evaporating down the resulting aqueous hydroxylammonium sulfate solution under reduced pressure at < 100°C and obtaining a concentrated hydroxylammonium sulfate solution,
d) crystallizing out not more than 70% by weight of the amount of hydroxylammonium sulfate present in the aqueous solution to give crystalline hydroxylammonium sulfate and a mother liquor, and
e) isolating the crystalline hydroxylammonium sulfate from the mother liquor.

2. A process as claimed in claim 1, wherein a hydroxylammonium sulfate solution obtained by catalytic hydrogenation of nitric oxide with hydrogen in aqueous sulfuric acid in the presence of a noble metal catalyst is used as a starting material.

3. A process as claimed in claim 1 or 2, wherein a weakly basic ion exchanger is used.

4. A process as claimed in any of claims 1 to 3, wherein the aqueous hydroxylammonium sulfate solution is passed through a fixed-bed basic ion exchanger until the total amount of the solution obtained has a pH of from 3.0 to 4.0.

5. A process as claimed in any of claims 1 to 4, wherein, in stage c), the hydroxylammonium sulfate solution is evaporated down at from 50 to 90°C under from 120 to 670 mbar.

6. A process as claimed in any of claims 1 to 5, wherein crystalline hydroxylammonium sulfate is precipitated during the evaporation.

7. A process as claimed in any of claims 1 to 6, wherein up to 40% by weight of the hydroxylammonium sulfate present in the aqueous solution is precipitated in crystalline form.

## Revendications

1. Procédé de préparation de sulfate d'hydroxylammonium cristallin ayant une teneur réduite en sulfate d'ammonium à partir de solutions aqueuses qui contiennent en plus du sulfate d'hydroxylammonium du sulfate d'ammonium et de l'acide sulfurique, procédé qui comprend les étapes suivantes
a) mise en contact d'une solution aqueuse qui contient par partie en poids de sulfate d'hydroxylammonium 0,02 à 0,3 partie en poids de sulfate d'ammonium et 0,02 à 0,2 partie en poids d'acide sulfurique, avec des échangeurs d'ions basiques avec obtention d'une solution ayant un pH de 3,0 à 4,0
b) séparation de l'échangeur d'ions basique et de la solution aqueuse de sulfate d'hydroxylammonium
c) évaporation de la solution aqueuse de sulfate d'hydroxylammonium ainsi obtenue, sous pression réduite à une température inférieure à 100°C, avec obtention d'une solution concentrée de sulfate d'hydroxylammonium
d) cristallisation d'au plus 70% en poids de la quantité de sulfate d'hydroxylammonium contenue dans la solution aqueuse, avec obtention de sulfate d'hydroxylammonium cristallin et d'une liqueur-mère et
e) séparation du sulfate d'hydroxylammonium cristallin et de la liqueur-mère.

2. Procédé selon la revendication 1, caractérisé en ce qu'on part d'une solution de sulfate d'hydroxylammonium qui a été obtenue par hydrogénation catalytique de monoxyde d'azote avec de l'hydrogène dans de l'acide sulfurique aqueux en présence de catalyseurs de étaux nobles.

3. Procédé selon l'une ou l'autre des revendications 1 et 2, caractérisé en ce qu'on utilise des échangeurs d'ions faiblement basiques.

4. Procédé selon l'une quelconque des revendications 1 à 3, caractérisé en ce qu'on fait passer la solution aqueuse de sulfate d'hydroxylammonium à travers un échangeur d'ions basique sous forme solide jusqu'à ce que la totalité de la solution obtenue présente un pH de 3,0 à 4,0.

5. Procédé selon l'une quelconque des revendications 1 à 4, caractérisé en ce qu'on évapore dans l'étape c) la solution de sulfate d'hydroxylammonium à une température de 50 à 90°C sous une pression de 120 à 670 mbar.

6. Procédé selon l'une quelconque des revendications 1 à 5, caractérisé en ce qu'on sépare le sulfate d'hydroxylammonium cristallin pendant l'évaporation.

7. Procédé selon l'une quelconque des revendications 1 à 6, caractérisé en ce qu'on sépare à l'état cristallin jusqu'à 40% en poids du sulfate d'hydroxylammonium contenu dans la solution aqueuse.
